Europäisches Patentamt

European Patent Office

Office européen des brevets

(19)

(11) Veröffentlichungsnummer: **0 045 435**
B2

(12) **NEUE EUROPÄISCHE PATENTSCHRIFT**

(45) Veröffentlichungstag der neuen Patentschrift:
20.04.88

(21) Anmeldenummer: 81105722.3

(22) Anmeldetag: 21.07.81

(51) Int. Cl.⁴: **B 01 D 13/04**, B 01 D 13/00

(54) Zur Ultrafiltration geeignete Membran aus Polyamid sowie Verfahren zu deren Herstellung.

(30) Priorität: 25.07.80 DE 3028213

(43) Veröffentlichungstag der Anmeldung:
10.02.82 Patentblatt 82/6

(45) Bekanntmachung des Hinweises auf die Patenterteilung:
15.02.84 Patentblatt 84/7

(45) Bekanntmachung des Hinweises auf die Entscheidung
über den Einspruch:
20.04.88 Patentblatt 88/16

(84) Benannte Vertragsstaaten:
AT BE CH FR GB IT LI LU NL SE

(73) Patentinhaber: Akzo GmbH,
Postfach 10 01 49 Kasinostrasse 19-23,
D-5600 Wuppertal-1 (DE)

(72) Erfinder: Schindler, Erich Dr., Dipl.-Chemiker,
Ellsenweg 4, D-8753 Obernburg (DE)
Erfinder: Maier, Franz, Burgunderstrasse 23,
D-8753 Obernburg (DE)

(56) Entgegenhaltungen:
EP - A - 0 001 047
EP - A - 0 002 053
EP - A - 0 005 536
DE - B - 1 212 290
DE - B - 2 236 226
DE - B - 2 751 910
FR - A - 1 544 807
FR - A - 1 584 659
FR - A - 2 368 289
FR - A - 2 391 837
FR - A - 2 406 469
US - A - 3 876 738

CABASSO et al.: "Journal of Applied Polymer Science",
1976, 2377-2394

(56) Entgegenhaltungen: (Fortsetzung)
CRAIG-KONIGSBERG, "The Journal of Physical
Chemistry", 1961, 166-172
Chem. Abstr. Vol. 84, 111696K
Chem. Abstr. Vol. 91, 6113q
Chem. Abstr. Vol. 93, 240731c

## Beschreibung

Die Erfindung betrifft eine zur Ultrafiltration geeignete Membran aus einem Polyamid, einem Copolyamid oder einem Gemisch von Polyamiden und ein Verfahren zur Herstellung dieser Membran aus einer Giesslösung, die etwa 12 bis 22% in Ameisensäure gelöstes Polyamid enthält, wobei die Giesslösung bei niedriger Temperatur auf eine gegen die Lösungsbestandteile beständige Trägerfolie als dünne Schicht aufgetragen und dann in ein Fäll- und Waschbad eingeführt wird.

Aus der EP-A 0 005 536 ist ein derartiges Verfahren zur Herstellung einer zur Ultrafiltration geeigneten, gegossenen Membran bekannt, bei welchem eine Giesslösung von etwa 10 bis 18% Polyamid in Ameisensäure gelöst und auf eine gegen die Lösungsbestandteile beständige Trägerfolie aus Polyester als dünne Schicht aufgetragen wird. Die Giesslösung wird mit der Trägerfolie in 40 bis 50%ige Ameisensäure für etwa 3 Minuten getaucht und dann eine Stunde in Wasser gewaschen. Anschliessend wird die inzwischen entstandene Membran von der Trägerfolie abgezogen und unter Vermeidung von Schrumpf getrocknet.

Die entstandene Membran hat über den gesamten Querschnitt gleichmässige Porengrösse und besitzt keine Ultrafiltrationshaut. Es wird zwar beschrieben, dass durch Absenkung der Ameisensäurekonzentration im Ameisensäurebad eine ungleichmässige Porengrössenverteilung in der Membran und bei noch geringerer Ameisensäurekonzentration eine Membran mit Haut entsteht, jedoch können diese Membranen nicht nach dem oben beschriebenen, kontinuierlichen Verfahren hergestellt werden.

In der DE-OS 2 845 797 ist ein Verfahren zur Herstellung einer zur Ultrafiltration geeigneten, anisotropen, aber hautlosen Membran beschrieben, bei welchem die Giesslösung beispielsweise ein in Ameisensäure gelöstes Polyamid enthält. Durch gezielten Abbau der Giesslösung vor dem Vergiessen werden Membranen erreicht, die eine Ausschlussgrenze für Molekulargewichte zwischen 300 und 2000 haben. Um die Membranen für grössere Molekulargewichte geeignet zu machen, muss ein anderes Lösungsmittel verwendet werden. Es ist auch kein Hinweis darauf angegeben, wie derartige Membranen kontinuierlich hergestellt werden können.

In Form von Hohlfäden sind Ultrafiltrationsmembranen aus der DE-OS 2 606 244 bekannt. Bei dem dort beschriebenen Verfahren besteht die Lösung beispielsweise aus einer 15 bis 25%igen Polyamidlösung, wobei das Lösungsmittel Ameisensäure sein kann. Dieser Lösung wird eine kernbildende Substanz, beispielsweise ein geeignetes Metallsalz, zugegeben. Die Lösung wird nach dem Giessen in ein Koagulationsbad eingeführt. Nach beendeter Koagulation werden die Metallsalze in einem Waschbad ausgewaschen, wodurch die gewünschten Poren entstehen. Die auf diese Weise hergestellte Membran enthält über die gesamte Querschnittsfläche ein gleichmässig verteiltes Netzwerk aus feinen Filterkanälen.

Es wurde nun gefunden, dass es möglich ist, Polyamidmembranen mit hoher Ausschlussgrenze auch ohne als Porenbildner wirkende, kernbildende Substanzen aus Lösungen eines Polyamids in Ameisensäure herzustellen. Die Viskosität giessfähiger Lösungen muss verhältnismässig hoch sein, was dazu führt, dass sich nur Lösungen mit hohen Polyamidkonzentrationen zur Herstellung gegossener Membranen eignen. Diese führen aber zu sehr kleinen Poren in weiträumiger Verteilung und sehr geringen, so für keinen bekannten Zweck brauchbaren Ultrafiltrationsleistungen. Um brauchbare Porengrössen und Porenzahlen zur Sicherstellung ausreichender Ultrafiltrationsleistung zu erhalten, müsste demnach die Polyamid-Konzentration der Lösung so stark abgesenkt werden, dass sie nicht mehr vergossen und kontinuierlich dem Fäll- und Waschbad zugeführt werden kann.

Aufgabe der Erfindung ist es demnach, zu gegossenen Membranen verarbeitbare Lösungen eines Polyamids oder eines Gemisches von Polyamiden in Ameisensäure bereitzustellen, welche in ihrer Konzentration so eingestellt werden können, dass daraus kontinuierlich hergestellte Membranen die gewünschten Porengrössen und Ultrafiltrationsleistungen zeigen.

Erfindungsgemäss wird diese Aufgabe durch eine zur Ultrafiltration geeignete, aus einer Ultrafiltrationshaut und einer Stützschicht bestehende Membran aus einem Polyamid, einem Copolyamit oder einem Gemisch von Polyamiden gelöst, wobei die Grösse der Poren in der Stützschicht mit der Entfernung von der Ultrafiltrationshaut zunimmt, die durch Vergiessen einer Giesslösung, welche 12 bis 22% Polyamid und 1 bis 7% Polyäthylenglykol in Ameisensäure enthält und auf eine Temperatur von unter etwa 18°C gebracht ist, durch Auftragen dieser Giesslösung auf eine gegen die Lösungsbestandteile beständige Trägerfolie, durch Einführen der auf die Trägerfolie gebrachten Giesslösung in ein Fäll- und Waschbad, durch Abziehen der koagulierten und ausgewaschenen Membran von der Trägerfolie, durch Verstrecken der Membran in wenigstens einer Richtung und durch anschliessendes Trocknen hergestellt ist.

Bevorzugterweise handelt es sich hierbei um Membranen mit einer Ultrafiltrationsleistung von etwa 50 bis 20 000 l/m² h bar.

Die Filtrationseigenschaften wurden mit Dextranen verschiedener Durchschnittsmolekulargewichte in wässrigen Lösungen (5%-ig) bestimmt. Amicon TCF 10-Gerät, 1 bar Druck bei 25°C.

Eine Membran mit einer Ultrafiltrationsleistung von 50 l/m² h bar hält Dextran mit einem Molekulargewicht von 20 000 noch zu 95% zurück, eine Membran mit einer Ultrafiltrationsleistung von 347 l/m²h bar hält Dextran mit einem Molekulargewicht von 64 000 zu 85% und eine Membran mit einer Ultrafiltrationsleistung von 13 800 l/m²h bar

hält Dextran mit einem Molekulargewicht von 2 000 000 zu 2% zurück.

Bei Membranen mit hoher Ultrafiltrationsleistung lässt sich die Porengrösse nach der Blaspunktmethode, bei der Luft bei 22°C durch ein alkoholfeuchtes Filter geblasen wird, bestimmen (ASTM-Methode F 316–70 (1976)).

Daraus lässt sich für eine Membran mit einer Ultrafiltrationsleistung von 13 800 l/m² h bar die Porengrösse zu 300 nm, für die mit einer Ultrafiltrationsleistung von 19 800 l/m² h bar zu 500 nm berechnen.

Das Verfahren zur Herstellung einer zur Ultrafiltration geeigneten, gegossenen Membran aus einer Giesslösung, die etwa 12 bis 22% in Ameisensäure gelöstes Polyamid enthält, wobei die Giesslösung bei niedriger Temperatur auf eine gegen die Lösungsbestandteile beständige Trägerfolie als dünne Schicht aufgetragen und dann in ein Fäll- und Waschbad eingeführt wird, zeichnet sich dadurch aus, dass die auf eine Temperatur von unter 18°C gebrachte Giesslösung zusätzlich 1 bis 7% Polyäthylenglykol enthält, dass die auf die Trägerfolie gebrachte Giesslösung durch ein Fäll- und Waschbad geführt wird und dass dann die Membran von der Trägerfolie abgezogen, in wenigstens einer Richtung verstreckt und anschliessend getrocknet wird.

Die jeweiligen Mengenverhältnisse sind in allen Fällen in Gewichtsprozent angegeben.

Bei einer bevorzugten Weiterbildung des erfindungsgemässen Verfahrens wird die Membran vor dem Trocknen in wenigstens einer Richtung im Verhältnis von etwa 1:1,5 bis 1:2,5 verstreckt. Durch die Verstreckung wird eine Verfestigung der Membran und die Einstellung der Porengrösse erreicht. Dabei hat es sich als günstig erwiesen, die Verstreckung der Membran durch Ziehen über eine Streckstange zu vollziehen. Besonders gute Ergebnisse werden erzielt, wenn die Streckstange beim Verstrecken auf eine Temperatur von etwa 130 bis 140°C gleichmässig erhitzt ist.

Erfindungsgemäss werden die Ultrafiltrationsmembranen zu Beginn des Trockenvorganges thermofixiert. Zweckmässigerweise wird die Membran unter Verhinderung einer Längs- und/oder Querkontraktion zur Thermofixierung bei gleichzeitiger Vortrocknung zunächst auf etwa 130°C erwärmt und dann bei etwa 60 bis 80°C fertiggetrocknet. Eine Vermeidung der Längs- und Querkontraktion lässt sich durch Anlegen der Folie auf ein Transportband, beheizte Walzen od. dgl. vermeiden.

Bei einer bevorzugten Ausgestaltungsform der Erfindung wird zur Herstellung der Giesslösung Ameisensäure mit einer Mindestkonzentration von etwa 80% verwendet. Dabei ergeben sich günstige Ultrafiltrationsleistungen, wenn als Lösung eine solche mit etwa 14 bis 20% Polyamid in mindestens 85%iger Ameisensäure verwendet wird.

Grundsätzlich eignen sich zu dem erfindungsgemässen Verfahren alle Polyamide, Copolyamide und deren Gemische, die in Ameisensäure löslich sind, und unter Zugabe von Polyäthylenglykol zu einer giessfähigen Lösung führen. Als besonders geeignet haben sich beispielsweise Polyamid 6, Polyamid 6.6 oder Copolymere eines Polyamids, beispielsweise aus AH-Salz und ε-Caprolactam, herausgestellt. Dabei hat sich die Beimengung von etwa 2 bis 5% Polyäthylenglykol in die Lösung besonders bewährt. Zur Unterstützung der Hautbildung ist eine Verweilzeit von mindestens 2 s in der Umgebungsluft vorteilhaft. Das Fäll- und Waschbad sollte vorteilhafterweise nicht mehr als 10% Ameisensäure enthalten. Auch hat es sich als günstig herausgestellt, die Temperatur der Lösung bzw. die Temperatur des Koagulations- und Waschbades auf unter 15°C zu halten.

Die Erfindung soll durch Zeichnungen und Beispiele näher erläutert werden. Es zeigen:

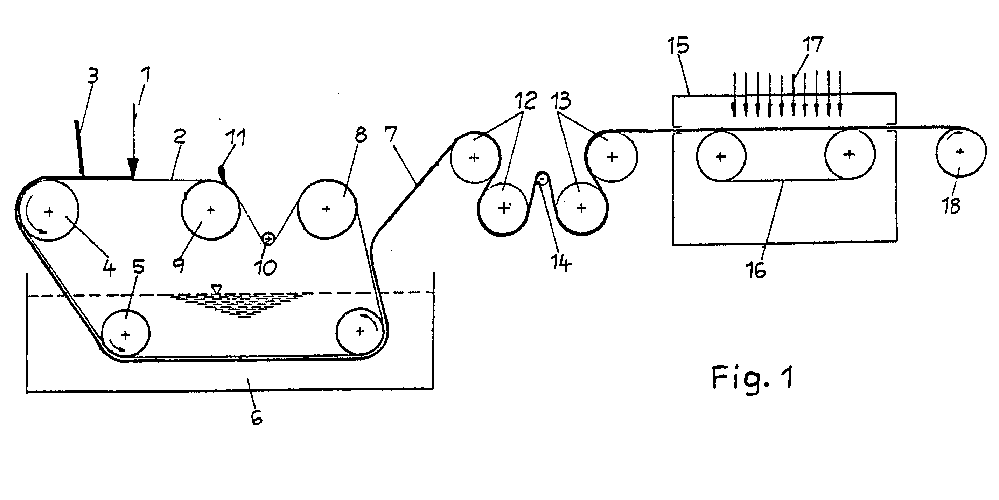

Fig. 1 die schematische Darstellung einer Vorrichtung mit der nach dem erfindungsgemässen Verfahren die in den Beispielen aufgeführten Membranen hergestellt werden,

Fig. 2 der vergrösserte Querschnitt einer Ultrafiltrationsmembran aus Polyamid 6,

Fig. 3 die vergrösserte Darstellung einer von der Stützschicht gebildeten Oberfläche der Membran aus Fig. 2 mit einer Ultrafiltrationsleistung von 347 l/m² h bar.

Fig. 4 die vergrösserte Darstellung einer von der Ultrafiltrationshaut gebildeten Oberfläche der Membran aus Fig. 2 mit einer Ultrafiltrationsleistung von 347 l/m² h bar.

Fig. 5 die vergrösserte Darstellung einer von der Stützschicht gebildeten Oberfläche einer Membran mit einer Ultrafiltrationsleistung von 13 800 l/m² h bar.

Fig. 6 die vergrösserte Darstellung einer von der Ultrafiltrationshaut gebildeten Oberfläche einer Membran mit einer Ultrafiltrationsleistung von 13 800 l/m² h bar.

Beispiele

Es wurden vier verschiedene Lösungen 1 angesetzt und mit Hilfe einer nicht dargestellten, an sich bekannten Auftragsvorrichtung auf eine trockene Trägerfolie 2 aus Polyester aufgebracht und durch ein Rakel 3 verteilt. Die für die Herstellung nach dem erfindungsgemässen Verfahren erforderlichen Daten sind in Tabelle I für die vier verschiedenen Lösungen aufgeführt. Nach einer Verweilzeit von wenigen Sekunden an Luft wird mit Hilfe der Trägerfolie 2 und Walzen 4 und 5 die Lösung in ein Koagulations- und Auswaschbad 6 eingetauscht. Die Koagulations- und Waschflüssigkeit war Wasser, wobei die im Gegenstrom fliessende Wassermenge so eingestellt wurde, dass die Konzentration an Ameisensäure am Auslauf des Koagulations- und Waschbades 10% nicht überschritt. Die Temperatur der Lösung und der Koagulations- und Waschflüssigkeit wurde auf einer Temperatur von 13°C gehalten.

Nach dem Herausführen der inzwischen entstandenen Membran 7 aus dem Koagulations- und Waschbad 6, wurde die Membran 7 von der Trägerfolie 2 abgezogen. Die Trägerfolie 2 wurde über Walzen 8 und 9 und eine Spannrolle 10 zur Auftragsvorrichtung zurückgeführt, wobei durch eine Reinigungseinrichtung 11 die Folie von Schmutzpartikelchen gereinigt und getrocknet wurde.

Die noch nasse Membran 7 wurde in ein Streckwerk geführt, welches aus Walzenpaaren 12 und 13 und einer Streckstange 14 bestand. Die Membran wurde an der gleichmässig auf etwa 130°C erhitzten Streckstange 14 im Verhältnis 1:2 verstreckt. Anschliessend wurde die noch nasse Membran 7 in einen Trockner 15 geführt, wobei die Membran 7 nach dem Einlauf in den Trockner 15 zur Vermeidung eines Längs- und Querschrumpfes auf ein Transportband 16 abgelegt und durch eine Luftblaseinrichtung 17 zuerst auf etwa 130°C erhitzt und anschliessend bei Temperaturen von etwa 70°C fertiggetrocknet wurde. Nach dem Verlassen des Trockners 15 wurde die Membran auf eine Spule 18 gewickelt.

Die für die durch dieses Verfahren hergestellten Membranen charakteristischen Werte sind in Tabelle II zusammengestellt.

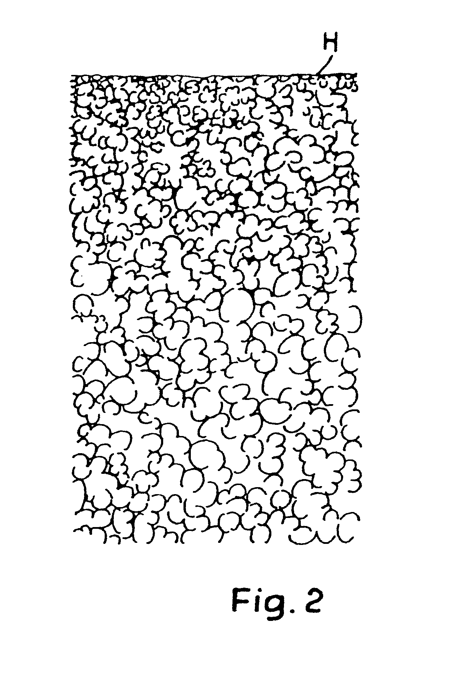

Die aus der Lösung I (lt. Tabelle I) hergestellte Membran ist in Fig. 2, 3 und 4 dargestellt.

Fig. 2 zeigt schematisch den vergrösserten Querschnitt dieser Ultrafiltrationsmembran mit einer Ultrafiltrationshaut H und der Stützschicht. Die Grösse der Poren der Ultrafiltrationsmembran nimmt mit der Entfernung von der Ultrafiltrationshaut zu. Die Gesamtdicke der Membran beträgt, wie in Tabelle II aufgeführt, 30 µm.

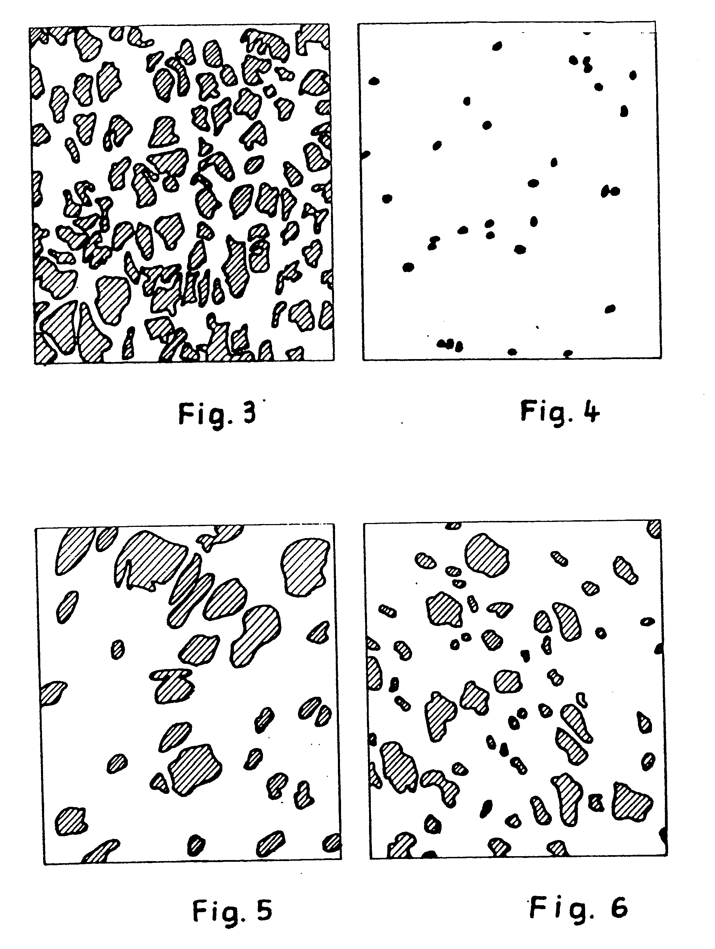

Fig. 3 zeigt die Oberfläche der der Ultrafiltrationshaut gegenüberliegenden Stützschicht dieser Ultrafiltrationsmembran.

Fig. 4 zeigt die Oberfläche der Ultrafiltrationshaut dieser Ultrafiltrationsmembran mit einer Ultrafiltrationsleistung von 347 l/m² h bar.

Fig. 5 und 6 zeigt die Oberflächen einer Ultrafiltrationsmembran, welche aus der Lösung IV (Tabelle I) hergestellt wurde, wobei Fig. 5 die Oberfläche der Stützschicht und Fig. 6 die Oberfläche der Ultrafiltrationshaut mit einer Ultrafiltrationsleistung von 13 800 l/m² h bar (lt. Tabelle II) dargestellt.

Tabelle I

| Lösung lfd. Nr. | PA 6-Konzentrat | mittleres Mol-Gewicht von PA 6 | PEG-Konzentrat | mittleres Mol-Gewicht von PEG | aufgetr. Schichtdicke der Lösung | Verweilzeit an Luft | Verweilzeit im Koag. -u. Waschbad |
|---|---|---|---|---|---|---|---|
| | % | Mn | % | Mn | µm | s | s |
| I | 20 | 35 000 | 2 | 600 | 100 | 5 | 120 |
| II | 16 | 35 000 | 3,2 | 600 | 150 | 5 | 120 |
| III | 14 | 20 100 | 4,2 | 600 | 150 | 5 | 120 |
| IV | 14 | 20 100 | 4,2 | 2000 | 150 | 5 | 120 |

Tabelle II

| Lösung lfd. Nr. | Ultrafiltrations-leistung | Dicke der Membran |
|---|---|---|
| | l/m² h bar | µm |
| I | 347 | 30 |
| II | 1 200 | 73 |
| III | 10 000 | 41 |
| IV | 13 800 | 70 |

Patentansprüche

1. Zur Ultrafiltration geeignete, aus einer Ultrafiltrationshaut und einer Stützschicht bestehende Membran aus einem Polyamid, einem Copolyamid oder einem Gemisch von Polyamiden, wobei die Grösse der Poren in der Stützschicht mit der Entfernung von der Ultrafiltrationshaut zunimmt, hergestellt durch Vergiessen einer Giesslösung, welche 12 bis 22 Gew.-% Polyamid und 1 bis 7 Gew.% Polyäthylenglykol in Ameisensäure enthält und auf eine Temperatur von unter etwa 18°C gebracht ist, durch Auftragen dieser Giesslösung auf eine gegen die Lösungsbestandteile beständige Trägerfolie, durch Einführen der auf die Trägerfolie gebrachten Giesslösung in ein Fäll- und Waschbad durch Abziehen der koagulierten und ausgewaschenen Membran von der Trägerfolie, durch Verstrecken der Membran in wenigstens einer Richtung und durch anschliessendes Trocknen.

2. Membran nach Anspruch 1 mit einer Ultrafiltrationsleistung von etwa 50 bis 20 000 l/m² h bar.

3. Verfahren zur Herstellung einer zur Ultrafiltration geeigneten, gegossenen Membran nach Anspruch 1 oder 2, aus einer Giesslösung, die etwa 12 bis 22 Gew.-% in Ameisensäure gelöstes Polyamid enthält, wobei die Giesslösung bei niedriger Temperatur auf eine gegen die Lösungsbestandteile beständige Trägerfolie als dünne Schicht aufgetragen und dann in ein Fäll- und Waschbad eingeführt wird, dadurch gekennzeichnet, dass die auf eine Temperatur von unter etwa 18°C gebrachte Giesslösung zusätzlich 1 bis 7 Gew.% Polyäthylenglykol enthält, dass die auf die Trägerfolie gebrachte Giesslösung durch ein Fäll- und Waschbad geführt wird und dass dann die Membran von der Trägerfolie abgezogen, in wenigstens einer Richtung verstreckt und anschliessend getrocknet wird.

4. Verfahren nach Anspruch 3, dadurch gekennzeichnet, dass die Membran vor dem Trocknen in wenigstens einer Richtung im Verhältnis von etwa 1:1,5 bis 1:2,5 verstreckt wird.

5. Verfahren nach Anspruch 3 oder 4, dadurch gekennzeichnet, dass die Membran durch Ziehen über eine Streckstange verstreckt wird.

6. Verfahren nach Anspruch 5, dadurch gekennzeichnet, dass die Membran durch Ziehen über eine Temperatur von etwa 130 bis 140°C gleichmässig erhitzte Streckstange verstreckt wird.

7. Verfahren nach Anspruch 3 bis 6, dadurch gekennzeichnet, dass die Membran zu Beginn des Trockenvorganges thermofixiert wird.

8. Verfahren nach Anspruch 7, dadurch gekennzeichnet, dass beim Thermofixier- und Trockenvorgang die Membran unter Verhinderung einer Längs- und/oder Querkontraktion zunächst auf etwa 130°C erwärmt und dann bei etwa 60 bis 80°C fertiggetrocknet wird.

9. Verfahren nach Anspruch 3 bis 8, dadurch gekennzeichnet, dass zur Herstellung der Lösung Ameisensäure mit einer Mindestkonzentration von etwa 80 Gew.% verwendet wird.

10. Verfahren nach Anspruch 3 bis 9, dadurch gekennzeichnet, dass als Lösung etwa 14 bis 20% Polyamid in mindestens 75%iger Ameisensäure verwendet wird.

11. Verfahren nach Anspruch 3 bis 10, dadurch gekennzeichnet, dass als Polyamid Nylon 6 verwendet wird.

12. Verfahren nach Anspruch 3 bis 10, dadurch gekennzeichnet, dass als Polyamid Nylon 6.6 verwendet wird.

13. Verfahren nach Anspruch 3 bis 10, dadurch gekennzeichnet, dass die Lösung ein in Ameisensäure gelöstes Copolymeres eines Polyamids aus AH-Salz und $\varepsilon$-Caprolactam enthält.

14. Verfahren nach Anspruch 3 bis 13, dadurch gekennzeichnet, dass die Lösung etwa 2 bis 5 Gew.% Polyäthylenglykol enthält.

15. Verfahren nach Anspruch 3 bis 14, dadurch gekennzeichnet, dass die Temperatur der Lösung unter etwa 15°C gehalten wird.

16. Verfahren nach Anspruch 3 bis 15, dadurch gekennzeichnet, dass die auf die Trägerfolie aufgebrachte Lösung nach einer Verweilzeit von mindestens etwa 2 s in der Umgebungsluft in das Fäll- und Waschbad geführt wird.

17. Verfahren nach Anspruch 3 bis 16, dadurch gekennzeichnet, dass das Fäll- und Waschbad maximal 10 Gew.% Ameisensäure enthält.

18. Verfahren nach Anspruch 3 bis 17, dadurch gekennzeichnet, dass die Temperatur des Waschbades auf unter etwa 15°C gehalten wird.

## Revendications

1. Membrane en un polyamide, un copolyamide ou un mélange de polyamides, constituée par une peau d'ultrafiltration et une couche-support, appropriée pour l'ultrafiltration, où la grosseur des pores dans le couche-support augmente au fur et à mesure qu'on s'éloigne de la peau d'ultra-filtration, fabriquée en coulant une solution à couler qui contient 12 à 22% en poids de polyamide et 1 à 7% en poids de polyéthylèneglycol dans l'acide formique, et qui est amenée à une température inférieure à environ 18°C, en appliquant cette solution à couler sur une feuille-support résistant aux constituants de la solution, en introduisant la solution à couler appliquée sur la feuille-support dans un bain de coagulation et de lavage, en enlevant de la feuille-support le membrane coagulée et lavée, en étirant la membrane dans au moins un sens puis en la séchant.

2. Membrane selon la revendication 1, ayant un débit d'ultra-filtration d'environ 50 à 20 000 l/m²h bar.

3. Procédé pour la fabrication d'une membrane coulée, appropriée pour l'ultra-filtration, selon les revendications 1 ou 2, à partir d'une solution à couler qui contient environ 12 à 22% en poids de polyamide dissous dans l'acide formique, la solution à couler étant appliquée à basse température, sous forme d'une couche mince, sur une feuille-support résistant aux constituants de la solution puis étant introduite dans un bain de coagulation et de lavage, caractérisé par le fait que la solution à couler amenée à une température inférieure à environ 18°C contient en plus 1 à 7% en poids de polyéthylèneglycol, que la solution à couler appliquée sur la feuille-support est introduite dans un bain de coagulation et de lavage puis que la membrane est enlevée de la feuille-support, étirée dans au moins un sens puis séchée.

4. Procédé selon la revendication 3, caractérisé par le fait que la membrane est étirée avant le séchage dans au moins un sens dans un rapport d'environ 1:1,5 à 1:2,5.

5. Procédé selon les revendications 3 ou 4, caractérisé par le fait que la membrane est étirée par tirage sur une barre d'étirage.

6. Procédé selon la revendication 5, caractérisé par le fait que la membrane est étirée par tirage sur une barre d'étirage chauffée uniformément à une température d'environ 130 à 140°C.

7. Procédé selon l'une quelconque des revendications 3 à 6, caractérisé par le fait que la membrane est fixée thermiquement au début du processus de séchage.

8. Procédé selon la revendication 7, caractérisé par le fait que lors du processus de thermofixation et de séchage, la membrane est chauffée tout d'abord à environ 130°C pour empêcher un retrait longitudinal et/ou un retrait transversal, puis est chauffée pour finir de sécher à environ 60–80°C.

9. Procédé selon l'une quelconque des revendications 3 à 8, caractérisé par le fait que pour la fabrication de la solution, ou utilise de l'acide formique ayant une concentration minimum d'environ 80% en poids.

10. Procédé selon l'une quelconque des revendications 3 à 9, caractérisé par le fait qu'on utilise comme solution environ 14 à 20% de polyamide dans de l'acide formique à 75% minimum.

11. Procédé selon l'une quelconque des revendications 3 à 10, caractérisé par le fait qu'on utilise comme polyamide le «Nylon 6».

12. Procédé selon l'une quelconque des revendications 3 à 10, caractérisé par le fait qu'on utilise comme polyamide le «Nylon 6,6».

13. Procédé selon l'une quelconque des revendications 3 à 10, caractérisé par le fait que la solution contient un copolymère d'un polyamide, obtenu à partir de sel AH et de caprolactam, ε, dissous dans l'acide formique.

14. Procédé selon l'une quelconque des revendications 3 à 13, caractérisé par le fait que la solution contient environ 2 à 5% de polyéthylèneglycol.

15. Procédé selon l'une quelconque des revendications 3 à 14, caractérisé par le fait que la température de la solution est maintenu à une valeur inférieure à environ 15°C.

16. Procédé selon l'une quelconque des revendications 3 à 15, caractérisé par le fait que la solution appliquée sur la feuille-support est conduite dans le bain de coagulation et de lavage-après une durée de séjour dans l'air environnant d'au moins environ 2 secondes.

17. Procédé selon l'une quelconque des revendications 3 à 16, caractérisé par le fait que le bain de coagulation et de lavage contient au maximum 10% en poids d'acide formique.

18. Procédé selon l'une quelconque des revendications 3 à 17, caractérisé par le fait que la température du bain de lavage est maintenu à une valeur inférieure à environ 15°C.

**Claims**

1. A membrane of a polyamide, a copolyamide or a mixture of polyamides suitable for ultrafiltration and consisting of un ultrafiltration skin and a supporting layer, the size of the pores in the supporting layer increasing with the distance from the ultrafiltration skin, produced by casting a casting solution which contains from 12 to 22% by weight of polyamide and from 1 to 7% by weight of polyethylene glycol in formic acid and is brought a temperature below about 18°C, by applying this casting solution to a film substrate unaffected by the constituents of the solution, by introducing the casting solution applied to the film substrate into a precipitation and washing bath, by removing the coagulated and washed membrane from the film substrate, by stretching the membrane in at least one direction and by subsequent drying.

2. A membrane as claimed in Claim 1, having an ultrafiltration capacity of from about 50 to 20 000 l/m² h bar.

3. A process for producing a cast membrane suitable for ultrafiltration, of the type claimed in Claim 1 or 2, from a casting solution containing approximately 12 to 22% by weight of polyamide dissolved in formic acid, the casting solution being applied in the form of a thin layer at low temperature to a film substrate unaffected by the constituents of the solution and subsequently introduced into a precipitation and washing bath, characterized in that casting solution brought to a temperature below about 18°C additionally contains from 1 to 7% by weight of polyethylene glycol, in that the casting solution applied to the film substrate is passed through a precipitation and washing bath and in that the membrane is then removed from the film substrate, stretched in at least one direction and subsequently dried.

4. A process as claimed in Claim 3, characterized in that before drying the membrane is stretched in a ratio of from about 1:1,5 to 1:2,5 in at least one direction.

5. A process as claimed in Claim 3 or 4, characterized in that the membrane is stretched by drawing over a stretching bar.

6. A process as claimed in Claim 5, characterized in that the membrane is stretched by drawing over a stretching bar uniformly heated to a temperature of from about 130 to 140°C.

7. A process as claimed in Claims 3 to 6, characterized in that the membrane is heat-fixed at the beginning of drying.

8. A process as claimed in Claim 7, characterized in that during heat-fixing and drying the membrane is first heated to around 130°C without any longitudinal and/or transverse contraction and then dried to completion at around 60 to 80°C.

9. A process as claimed in Claims 3 to 8, characterized in that formic acid in a minimum concentration of around 80% by weight is used for preparing the solution.

10. A process as claimed in Claims 3 to 9, characterized in that approximately 14 to 20% of polyamide in at least 75% formic acid is used as the solution.

11. A process as claimed in Claims 3 to 10, characterized in that nylon-6 is used as the polyamide.

12. A process as claimed in Claims 3 to 10, characterized in that nylon-66 is used as the polyamide.

13. A process as claimed in Claims 3 to 10, caracterized in that the solution contains a copolymer of a polyamide of AH-salt and ε-caprolactam dissolved in formic acid.

14. A process as claimed in Claims 3 to 13, characterized in that the solution contains around 2 to 5% by weight of polyethylene glycol.

15. A process as claimed in Claims 3 to 14, characterized in that the temperature of the solution is kept below about 15°C.

16. A process as claimed in Claims 3 to 15, characterized in that the solution applied to the film substrate is passed into the precipitation and washing bath after a residence time of at least about 2 s in the ambient air.

17. A process as claimed in Claims 3 to 16, characterized in that the precipitation and washing bath contains at most 10% by weight of formic acid.

18. A process as claimed in Claims 3 to 17, characterized in that the temperature of the washing bath is kept to below about 15°C.

Fig. 1

0 045 435

Fig. 2

Fig. 3

Fig. 4

Fig. 5

Fig. 6